# EUROPÄISCHE PATENTANMELDUNG

(11) **EP 0 835 603 A2**
(43) Veröffentlichungstag der Anmeldung: **15.04.1998**
(21) Anmeldenummer: 97114021.5
(22) Anmeldetag: 14.08.1997
(51) Int. Cl.: A01D 43/10

(54) **Aufbereitungseinrichtung mit elektronischer Regeleinrichtung für eine landwirtschaftliche Bearbeitungsmaschine**

(30) Priorität: 14.08.1996 DE 19632868
(71) Anmelder: Alois Pöttinger Maschinenfabrik GmbH, 4710 Grieskirchen (AT)
(72) Erfinder: Pöttinger, Klaus, Dipl.-Ing., 4710 Grieskirchen (AT)
(74) Vertreter: Dupal, Helmut, Dipl.-Ing.

(57) **Zusammenfassung**

Aufbereitungseinrichtung für eine landwirtschaftliche Bearbeitungsmaschine, insbesonders für eine Mähmaschine mit einem Rotationsmähwerk, dieser nachgeordnet, welche Aufbereitungseinrichtung (1) von einem Eingangsgetriebe (14), insbesonders mit gesonderter Antriebswelle (21) antreibbar ist und im wesentlichen einen quer zur Fahrtrichtung (10) liegend angeordneten, rotierend angetriebenen Bearbeitungsteil (4), insbesonders ortsfest gelagert und mit Bearbeitungswerkzeugen ausgebildet, einen zu diesem in einem veränderbaren Abstand (20) fest einstellbaren Zustellteil (6), insbesonders als Klappe, Rechen oder drehbar gelagerte Zustellwalze ausgebildet, und eine im wesentlichen obere und seitliche Abdeckhaube (8) umfaßt, wobei der Zustellteil (6,7) im Abstand (20) zum rotierenden Bearbeitungsteil (4) mit einer Verstellvorrichtung (13) veränderbar einstellbar ist, die von einer elektronischen Regeleinrichtung (23) eingestellt wird, welche die, insbesonders über elektrische Zuleitungen (26) oder zusätzlich (27) oder drahtlos über eine Sender- und Empfangsanordnung, zugeführten Signale, die von wenigstens einem drehmoment- oder druck- oder kraftaufnehmendem Sensor (24), der im Antriebsbereich des rotierenden Bearbeitungs-teiles (4) angeordnet ist und von einem lage- oder stellungsaufnehmendem Sensor (25) für die Stellung des Zustellteiles (6 oder 7) in Bezug auf den rotierenden Bearbeitungsteil (4) abgegeben werden, aufnimmt, verarbeitet und Stellsignale an die Verstellvorrichtung (13) des Zustellteiles (6 oder 7) zur Verstellung, insbesonders über die elektrische Zuleitung (27) oder drahtlos über eine Sender- und Empfangsanordnung, abgibt.

## Beschreibung

Die Erfindung bezieht sich auf eine Aufbereitungseinrichtung für eine landwirtschaftliche Bearbeitungsmaschine, insbesonders eine Mähmaschine, nach dem Oberbegriff des Anspruches 1 und des Anspruches 10.

Solche Aufbereitungseinrichtungen für Scheibenmähwerke oder Trommelmähwerke, sind dem Rotations-mähwerk jeweils unmittelbar zugeordnet und in Richtung des Erntegutstromes, hinter diesem angebracht.

Die Aufbereitungseinrichtung besteht aus einer waagrecht ausgerichteten Aufbereitungstrommel oder -Walze als Bearbeitungsteil, die über den größten Teil der Arbeitsbreite des Mähwerkes reicht und aus einer oberhalb von dieser angeordneten, gelenkig gelagerten und in verschiedenen Stellungen einstellbaren Klappe oder einem Kamm als Zustellteil, mit dessen Verstellung ein Durchtrittsspalt zwischen diesem und dem Bearbeitungsteil nach dem verlangten Aufschlußgrad und nach der Durchsatzleistung des Erntegutes fest eingestellt werden kann oder aus einer unteren, ortsfest gelagerten, waagrecht ausgerichteten Walze als Bearbeitungsteil und einer oberhalb von dieser angeordneten, im Abstand zustellbaren, parallelen Walze als Verstellteil, die an Lenkern verschwenkbar oder in Schiebelagern verschiebbar angeordnet ist.

Dabei kann eine Federung die Einstellung der Klappe oder der Walze über einen vorbestimmten Weg variabel gestalten und bei Anwendung einer Walze als Zustellteil können die Walzen in der Grundstellung aufeinander- oder ineinanderlaufen und dabei einen Mindestdruck auf das durchgesetzte Erntegut ausüben.

Diese Aufbereitungseinrichtungen werden an heck- oder frontangebauten oder an gezogenen Rotationsmähwerken, aber auch an Maschinen, die nur der Aufbereitung von gemähtem und auf dem Boden abgelegtem Erntegut dienen, angewandt.

Nachteilig bei diesen Aufbereitungsvorrichtungen ist es, daß der Aufbereitungsgrad des Erntegutes nach der Art und der Durchsatzmenge des Erntegutes, nach der Drehzahl und nach der auf das Gut ausgeübten Kraft außerordentlich schwankend ist und durch steuernde Maßnahmen der Bedienungsperson des Zugfahrzeuges nicht oder nur sehr ungenügend ausgeglichen werden kann. Dazu kommt, daß die Menge an durchgesetztem Erntegut starken Schwankungen unterliegen kann und daß beim Anfahren der Maschine an Schlagenden die erforderliche Drehzahl der Aufbereitungseinrichtung zumeist nicht schnell genug erreicht wird, sodaß Störungen, wie Verstopfungen der Maschine, die Folge sein können.

Aufgabe der Erfindung ist es, bei einer Aufbereitungseinrichtung für ein Rotationsmähwerk die Steuerung als selbsttätige Regelung auszubilden, bei der durch Anwendung geeigneter Vorrichtungen stets ein gleichbleibender Aufbereitungsgrad des Erntegutes erzielbar ist und die Häufigkeit für das steuernde Eingreifen einer Bedienungsperson wesentlich eingeschränkt wird.

Diese Aufgabe wird bei einer Aufbereitungseinrichtung der eingangs genannten Gattung mit den Merkmalen des kennzeichnenden Teiles des Anspruches 1 oder 10 gelöst.

Die Folgeansprüche betreffen besonders vorteilhafte Ausgestaltungen der Erfindung und bilden, ebenso wie die Ansprüche 1 und 10, gleichzeitig einen Teil der Beschreibung.

Durch die Verknüpfung der Signale, die von einem drehmoment- oder druck- oder kraftaufnehmenden elektrischen Sensor an dem Bearbeitungsteil der Aufbereitungseinrichtung und von einem stellungsaufnehmenden Sensor, für den Abstand zwischen Bearbeitungsteil und Zustellteil, zur Bearbeitung des Erntegutes einer elektronischen Regeleinrichtung, die mit programmierbaren Rechnerchips ausgestattet ist, zugeführt werden, kann nach einem einprogrammierten Regelungsprogramm für ein Erntegut bestimmter Beschaffenheit ein bestimmter Bearbeitungsgrad der Aufbereitungseinrichtung eingestellt und erreicht werden, auch wenn die Durchsatzmengen in zeitlicher Folge sehr stark schwanken.
Dabei werden entsprechende Stellsignale von der elektronischen Regeleinrichtung an das Verstellorgan, wie beispielsweise einen elektrischen Linearmotor oder ein elektrohydraulisches Schaltventil für einen hydraulischen Stellzylinder oder dergleichen, abgegeben.

Die Verstellung in den neuen Abstand zwischen dem Bearbeitungsteil und dem Zustellteil der Aufbereitungseinrichtung wird vom stellungsaufnehmenden elektrischen Sensor, der gleichzeitig auch der lineare Stellmotor als Stellorgan sein kann, in ein elektrisches Signal umgewandelt, an die elektronische Regeleinrichtung zurückgemeldet und von dieser mit den Programmdaten verglichen.
Der günstigste Anbringungsort für die Sensoren ergibt sich aus dem Aufbau der Aufbereitungseinrichtung und deren Antrieb.

Es kann auch der druck- oder kraftaufnehmende Sensor bei einer federnden Lagerung des Zustellteiles an der Lagerung selbst angeordnet sein, um bei Überschreitung des durch die Federung vorgegebenen Druckes und der damit auf das Erntegut einwirkenden Preßkraft oder der auftretenden Widerstandskraft ein druck- oder kraftabhängiges Signal für die Regeleinrichtung zu erhalten.

Die Anordnung des stellungsaufnehmenden Sensors in Form eines Drehwinkelgebers oder eines linearen Wegaufnehmers, insbesonders eines Linearmotors, ergibt sich ebenfalls aus der Konstruktion der Aufbereitungseinrichtung.

Die Anordnung des drehzahlaufnehmenden Sensors kann an einer beliebigen Stelle des Antriebsstranges der Aufbereitungseinrichtung erfolgen. Dieser kann auch von einem mechanischen Sensor gebildet sein, der mit einem Umsetzer gekoppelt ist, der die mechanisch aufgenommenen Meßgrößen in elektrische Signale umsetzt. Eine ähnliche Anordnung eines mechanischen Sensors mit einem elektrischen Umsetzer ist auch bei Anwendung eines drehmoment- druck- oder kraftaufnehmenden Sensors möglich.
Als drehzahlaufnehmender Sensor kann auch ein schallaufnehmender Sensor verwendet werden, der an der Machine, möglichst an Maschinenrahmen der Aufbereitungseinrichtung, angebracht wird und in elektrische Signale umgewandelte Schallwerte an die Regeleinrichtung übermittelt, die eine Maß für die Drehzahl einer bestimmten Aufbereitungeinrichtung sind, mit denen die elektronische Regeleinrichtung programmiert ist.

Für die Programmierung des oder der Rechner(s) der elektrischen Regeleinrichtung kann die Änderung des Abstandes zwischen dem Bearbeitungsteil, d.h. der Aufbereitungstrommel oder -Walze, und dem Zustellteil, d.h. der Klappe, dem Rechen oder der Preßwalze oder dergleichen, von einer bestimmten Änderung des Drehmomentes oder des Druckes oder der Kraft zur Bearbeitung des Erntegutes hergeleitet sein.

Beim Anfahren und vor allem beim Wenden der Mähmaschine oder bei besonders großer Belastung oder bei Überlastung muß der Abstand zwischen dem Bearbeitungsteil und dem Zustellteil der Aufbereitungseinrichtung möglichst weit oder sogar vollständig geöffnet werden.

Die Umsetzung eines elektrischen Signals, das dann vom drehzahlaufnehmenden Sensor an die elektronische Regeleinrichtung abgegeben wird, und des elektrischen Signals des stellungsaufnehmenden Sensors kann in der Regeleinrichtung nach dem jeweiligen, aktivierten Programm verarbeitet werden und es können dadurch Störungen bei Durchsatz zu großer Erntgutmengen, zu geringer Drehzahl oder anderen besonderen Betriebszuständen, auch wenn sie durch Fehlbedienung hervorgerufen sind, vermieden werden.

Umgekehrt kann die elektronische Regeleinrichtung bei Erreichen einer oberen Grenzdrehzahl und eines geringen Drehmomentes ein Stellsignal zum Verringern des Abstandes zwischen dem Bearbeitungsteil und dem Zustellteil auf ein einprogrammiertes oder voreinstellbares Mindestmaß abgeben.

Weiters ist es von Vorteil, wenn bei Überschreitung der Belastung oder bei Unterschreitung einer Mindestarbeitsdrehzahl der Bearbeitungseinrichtung ein Warnsignal optisch und/oder akustisch gegeben wird und wenn bei anhaltender Grenzwertüber- oder -unterschreitung nach einer voreingestellten Zeit der Antrieb der Mähmaschine abgeschaltet wird.

Für die Anpassung der Aufbereitungseinrichtung an unterschiedliche Beanspruchungen durch die Art und Menge des Erntegutes und durch den beabsichtigten Bearbeitungsgrad desselben ist die Änderung der Programmierung über eine Buskupplung mittels eines angeschlossenen externen Rechners von Vorteil. In gleicher Weise ist es mit dieser Einrichtung möglich, das Auslesen von gespeicherten Arbeitsdaten vorzunehmen.
Es kann dies auch über die Busleitung eines Rechners, der im Zugfahrzeug installiert ist, geschehen.

Die Übertragung der elektrischen Signale der Sensoren und/oder der Stellsignale der elektronischen Regeleinrichtunge können entweder über elektrische Zuleitungen oder drahtlos über Funk-, Infrarot- oder Ulltraschall- Sende- und Empfangseinrichtungen erfolgen.

Es ist auch vereinfachend möglich, die Signale eines druckaufnehmenden Sensors und die Stellsignale der elektronischen Regeleinrichtung hydraulisch, mechanisch oder drahtlos zu übermitteln und den Zustellteil der Aufbereitungseinrichtung zumindest zwischen zwei Grenzabständen zum Bearbeitungsteil mit Hilfe der Signale eines stellungsaufnehmenden Sensors des Vertellorgnas einzuregeln.

Einfe Vereinfachung wird auch erreicht, wenn die Abdeckhaube der Aufbereitungseinrichtung als Zustellteil dient, auch wenn dadurch eine größere Masse bewegt werden muß.

Eine besonders einfache Anordnung eines druckaufnehmenden Sensors wird mittels eines Druckschalters in der Zuleitung zu einem als Verstellorgan dienenden hydraulischen Verstellzylinder hergestellt.

Die Erfindung wird an Hand der Zeichnung zweier besonders vorteilhafter Ausführungsformen der Erfindung beschrieben. Es zeigt:
- Fig. 1: eine Aufbereitungseinrichtung eines Frontmähwerkes, in Seitenansicht, geschnitten, schematisch;
- Fig. 2: eine Aufbereitungseinrichtung mit zwei Aufbereitungswalzen an einem gezogen oder heckangebauten Mähwerk, in Seitenansicht, geschnitten, schematisch;
- Fig. 3: die Antriebsanordnung einer Aufbereitungseinrichtung nach Fig. 1, teilweise geschnitten, schematisch;
- Fig. 4: ein Blockschaltbild der Regelanordnung mit Sensoren, Verstellorganen, Warneinrichtungen, Zuleitungen und elektronischer Releinrichtung, schematisch.

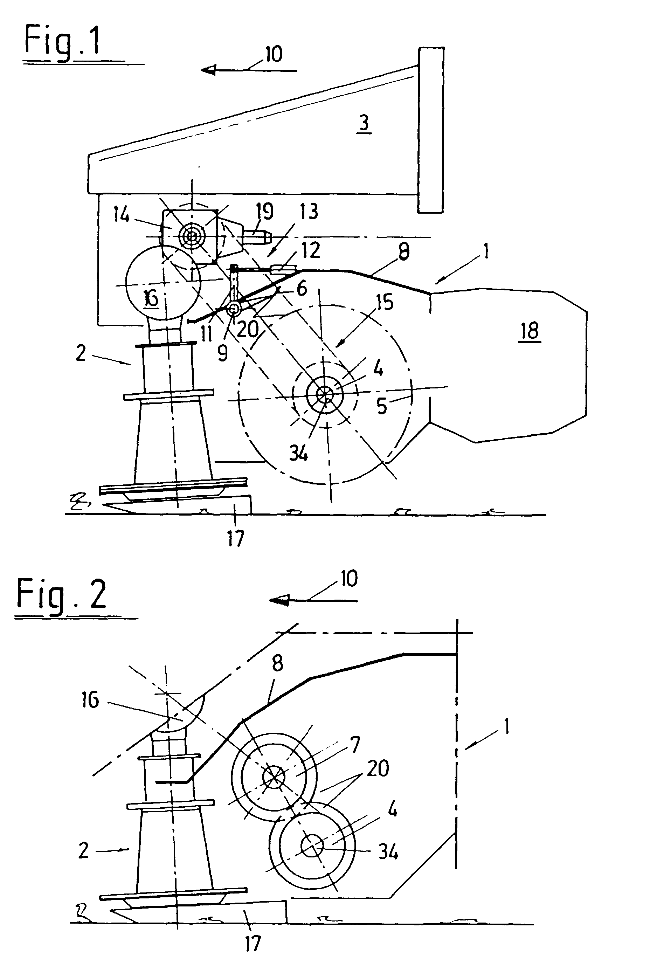

Ein an den Fronttragrahmen 3 angebautes Rotationsmähwerk 2 liegt mit dem Mähbalken 17 auf dem Boden auf und wird in Fahrtrichtung 10 von einem Antriebsfahrzeug, an dem der Fronttragrahmen 3 angebaut ist, geschoben (Fig.1).

Das Rotationsmähwerk 1 ist mit einem oben liegenden Mähwerksgetriebegehäuse 16 versehen, an dem ein Eingangsgetriebe 14 befestigt ist, über dessen Gelenkwellenanschluß 19 der Antrieb vom Antriebsfahrzeug her erfolgt.

Der Maschinenrahmen 36 der Aufbereitungseinrichtung 1 ist am Rotationsmähwerk 2 befestigt und trägt die Lagerungen des Bearbeitungsteiles 4 und des Zustellteiles 6 oder 7, die unmittelbar hinter dem Rotationsmähwerk 2, im Erntegutstrom liegend, angeordnet sind.

Bei der in Fig. 1 dargestellten Aufbereitugnseinrichtung 1 besteht der Bearbeitungsteil 4 aus einer Aufbereitungs-Trommel oder Walze, die waagrecht und im rechten Winkel zur Fahrtrichtung 10 und zum Mähwerksbalken 17 ausgerichtet, antreibbar gelagert ist.

Der Antrieb des Bearbeitungsteiles 4 erfolgt von der Antriebsseite 35 her über einen Antrieb 15, welcher den Bearbeitungsteil 4 nach vorne zu, über Kopf um die Welle 34 rotierend, antreibt, wobei der Flugkreis 5 der Bearbeitungswerkzeuge dargestellt ist.

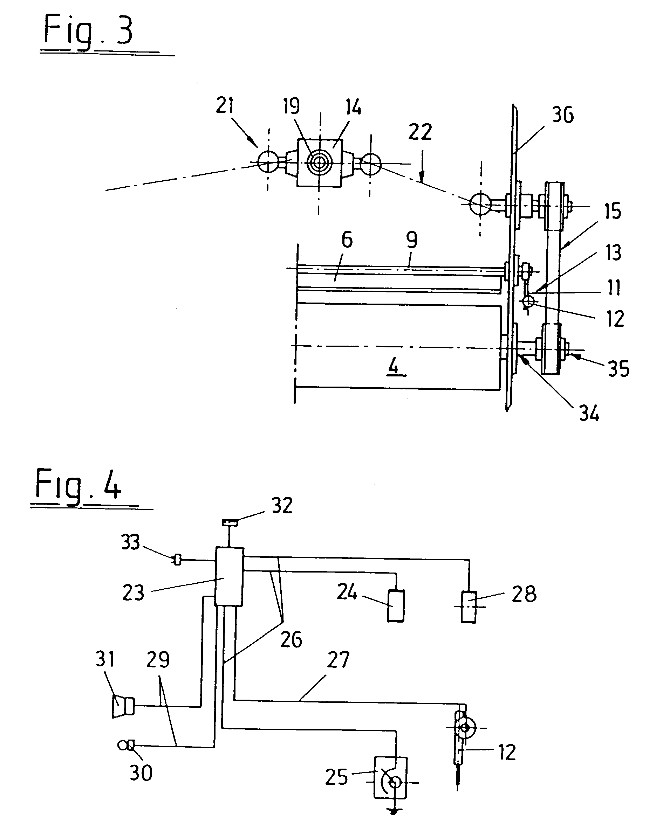

Der Antrieb 15 besteht aus einem Riemengetriebe mit Abtriebs- und Antriebsrad und wird von einer Antriebswelle 22 vom Eingangsgetriebe 14 aus angetrieben, dessen zweiter Ausgang mit einer Antriebswelle 21 für das Rotationsmähwerk 21 verbunden ist (Fig.3).

Oberhalb des Bearbeitungsteiles 4 ist, leicht nach vorne versetzt, über dessen Breite ein Zustellteil 6 an einer Schwenkachse 9 beiderseits an der Abdeckhaube 8 gelagert, die seitlich herabgezogen ist und nach hinten zu mit Führungsfahnen 18 für die Leitung des bearbeiteten Erntegustromes versehen ist.

Der Zustellteil 6 ist als Klappe oder Rechen ausgebildet und wird mit einer Verstellvorrichtung 13 über deren Stellhebel 11 in seinem Abstand 20 zum Bearbeitungsteil 4 verstellt, der von einem Verstellorgan 12, das ein elektrischer Linearmotor oder ein hydraulischer Stellzylinder sein kann, betätigt wird.

In Fig. 2 ist eine Variante einer Aufbereitungseinrichtung an einem gezogenen Rotationsmähwerk 2 dargestellt. Der Bearbeitungsteil 6 besteht aus einer angetriebenen Aufbereitungswalze, in einer Anordnung wie sie schon in Fig. 1 beschrieben wurde, und läuft mit einem Zustellteil 7 zusammen, der als drehbar gelagerte und parallel zum Bearbeitungsteil 4 ausgerichtete Walze ausgebildet ist, die an einer Verstellvorrichtung 13, in Form von, um eine Schwenkachse 9 höhenverschwenkbar gelagert ist. Über ein auf die Verstellvorrichtung 13 wirkendes Verstellorgan wird der Abstand 20 zwischen dem Bearbeitungsteil 4 und dem Zustellteil 7 eingestellt.

In der Grundstellung laufen die Walzen des Bearbeitungsteiles 4 und des Zustellteiles 7 ineinander, wobei die Walze des Zustellteiles 7 unter der Kraft einer nicht dargestellten Feder gegen die Walze des Bearbeitungsteiles 4 gehalten wird.

Nach oben und seitlich zu ist die Aufbereitungseinrichtung von einer Abdeckhaube 8 umgeben.

Im Blockschaltbild Fig. 4 ist eine elektronische Regeleinrichtung 23 wiedergegeben, die mit programmierbaren Rechnerchips und Speicherbausteinen ausgestattet ist und über elektrische Zuleitungen 26 mit einem drehmoment- oder druck- oder krafaufnehmenden Sensor 24 und mit einem drehzahlaufnehmenden Sensor 28, sowie mit einem stellungsaufnehmenden Sensor 25, in Form eines Drehwinkelgebers, verbunden ist.

Eine weitere Zuleitung 27 verbindet die elektronische Regeleinrichtung 23 mit einem Verstellorgan 12, das als Linearmotor ausgebildet sein kann.

Weiters ist die elektronische Regeleinrichtung 23 über die Zuleitungen 29 mit einer Warnleuchte 30 und einer Warnhupe 31 verbunden.

Die elektronische Regeleinrichtung 23 verfügt über eine Buskupplung 32 zum Anschluß an einen gesonderten, externen Rechner oder an das Bussystem und den Rechner des Zugfahrzeuges um die Programmierung der Releinrichtung 23 vornehmen zu können oder Daten aus dieser auszulösen.

Schließlich ist noch eine elektrische Spannungsversogung 33 über eine Kupplung anschließbar mit der die elektronische Regeleinrichtung 23 versorgt wird.

Die Sensoren 24 und 28 geben elektrische Signale an die elektronische Regeleinrichtung 23 ab, die nach der Größe des Drehmomentes oder der Kraft oder des Druckes und der Drehzahl an der Aufbereitungseinrichtung 1 die Einstellung des Spaltes 20 zwischen dem Bearbeitungsteil 4 und dem Zustellteil 6,7 über elektrische Stellsignale mit dem Verstellorgan 12 steuert, wobei jeder neu eingestellte Abstand vom stellungsaufnehmenden Sensor 25 an die elektronische Regeleinrichtung 23 zurück gemeldet wird. Bei länger anhaltenden Überschreitungen der in die elektronische Regeleinrichtung 23 einprogrammierten Grenzwerte gibt diese elektrische Signale an die Warnleuchte 30 und die Warnhupe 31 ab, damit die Bedienungsperson die Abschaltung der Mähmaschine vornehmen kann.

Das Zusammenwirken der elektronischen Regeleinrichtung 23 mit den Sensoren 24, 25 und 28 und mit dem Verstellorgan 12 zur Regelung des Spaltes 20 zwischen dem Bearbeitungsteil 4 und dem Zustellteil 6, 7 ist im allgemeinen Teil der Beschreibung und in den Ansprüchen dargelegt.

### Legende

- 1: Aufbereitungseinrichtung
- 2: Rotationsmähwerk
- 3: Fronttragrahmen der Mähmaschine
- 4: Bearbeitungsteil, als liegende Walze ausgebildet
- 5: Flugkreis der Aufbereitungswerkzeuge
- 6: Zustellteil, als Klappe oder Rechen ausgebildet
- 7: Zustellteil, als drehbare Zustellwalze ausgebildet
- 8: Abdeckhaube
- 9: Schwenkachse des Zustellteiles 6
- 10: Fahrtrichtung
- 11: Stellhebel des Zustellteiles 6
- 12: Verstellorgan, als elektrischer Linearmotor oder als hydraulischer Stellzylinder ausgebildet, der Verstellvorrichtung 13
- 13: Verstellvorrichtung
- 14: Eingangsgetriebe
- 15: Antrieb der Aufbereitungseinrichtung 1
- 16: Mähwerksgetriebegehäuse
- 17: Mähwerksbalken
- 18: Führungsfahne
- 19: Gelenkwellenanschluß des Eingangsgetriebes
- 20: Abstand zwischen Bearbeitungsteil 4 und Zustellteil 6,7
- 21: Antriebswelle für das Rotationsmähwerk 2
- 22: Antriebswelle für die Aufbereitungseinrichtung 1
- 23: elektronische Regeleinrichtung
- 24: drehmoment- oder druck- oder kraftaufnehmender Sensor
- 25: stellungsaufnehmender Sensor
- 26: elektrische Zuleitungen der Sensoren 24, 25
- 27: elektrische Zuleitungen des Verstellorgans 12
- 28: drehzahlaufnehmender Sensor
- 29: elektrische Zuleitungen für Warnleuchte 30 und Warnhupe 31
- 30: Warnleuchte
- 31: Warnhupe
- 32: Buskupplung
- 33: elektrische Spannungsversorgung der Regeleinrichtung 23
- 34: Welle des Bearbeitungsteiles 4
- 35: Abtriebsseite des Antriebes 15 der Aufbereitungseinrichtung 1
- 36: Maschinenrahmen der Aufbereitungeinrichtung 1

## Patentansprüche

1. Aufbereitungseinrichtung für eine landwirtschaftliche Bearbeitungsmaschine, insbesonders für eine Mähmaschine mit einem Rotationsmähwerk, dieser nachgeordnet, welche Bearbeitungseinrichtung von einem Eingangsgetriebe, insbesonders mit gesonderter Antriebswelle antreibbar ist und im wesentlichen einen quer zur Fahrtrichtung liegend angeordneten, rotierend angetriebenen Bearbeitungsteil, insbesonders einer ortsfest gelagerten Aufbereizungstrommel oder Aufbereitungswalze, mit Bearbeitungswerkzeugen ausgebildet, einen zu diesem in einem veränderbaren Abstand fest einstellbaren Zustellteil, insbesonders als Klappe, Rechen oder drehbar gelagerte Zustellwalze ausgebildet, und eine im wesentlichen obere und seitliche Abdeckhaube umfaßt, **dadurch gekennzeichnet, daß** der Zustellteil (6, 7) im Abstand (20) zum rotierenden Bearbeitungsteil (4) mit einer Verstellvorrichtung (13) veränderbar einstellbar ist, die über eine elektronischen Regeleinrichtung (23) eingestellt wird, welche die, insbesonders über elektrische Zuleitungen (26 oder und 27) oder drahtlos über die einer Sender- und/oder Empfangsanordnung, zugeführten Signale, die von wenigstens einem drehmoment- oder druck- oder kraftaufnehmendem Sensor, der im Antriebsbereich des rotierenden Bearbeitungsteiles (4) angeordnet ist und von einem lage- oder stellungsaufnehmenden Sensor (25) für die Stellung des Zustellteiles (6 oder 7) in Bezug auf den rotierenden Bearbeitungsteil (4) abgegeben werden, aufnimmt, verarbeitet und Stellsignale an die Verstellvorrichtung (13) des Zustellteiles (6 oder 7) zur Verstellung, insbesonders über die elektrische Zuleitung (27) oder drahtlos über eine Sender- und Empfangsanordnung, abgibt.

2. Aufbereitungseinrichtung nach Anspruch 1, dadurch gekennzeichnet, daß ein drehzahlaufnehmender Sensor (28) in den mit dem Bearbeitungsteil (4) der Bearbeitungseinrichtung (1) zwangsgekoppelten Teil des Antriebsstranges, insbesonders an der Abtriebsseite (35) des Antriebes (15) der Aufbereitungseinrichtung (1) und vorzugsweise an der Welle (34) des Bearbeitungsteiles (4) angebracht ist oder, daß ein schallaufnehmender Sensor an der Mähmaschine, insbesonders im Bereich oder am Maschinenrahmen (36) der Aufbereitungseinrichtung (1), vorzugsweise an der Abdeckhaube (8), angebracht ist, der Signale, insbesonders über elektrische Zuleitungen oder drahtlos über eine Sende- oder Empfangsanordnung, an die elektronische Regeleinrichtung (23) abgibt.

3. Aufbereitungseinrichtung nach Anspruch 1, dadurch gekennzeichnet, daß der drehmomentaufnehmende Sensor (24) im Antriebsweg der Aufbereitungseinrichtung (1), insbesonders an der Welle (34) des Bearbeitungsteiles (4), angebracht ist oder, daß ein druck- oder kraftaufnehmender Sensor (24) in den Antriebsweg der Aufbereitungseinrichtung (1), insbesonders in dessen Antrieb (15) eingebaut ist.

4. Aufbereitungseinrichtung nach Anspruch 1 oder 3, dadurch gekennzeichnet, daß ein druck- oder kraftaufnehmender Sensor (24) zwischen dem, insbesonders gegen eine an der Verstellvorrichtung (13) fest gelagerte Druckfeder, über einen vorgegebenen Wegbereich verschwenkbaren Zustellteil (6) und einem festen Teil der Verstellvorrichtung (13) angeordnet ist, der bei Überschreitung eines, vorzugsweise voreingestellten, Gegendruckes am Zustellteil oder an der der Druckfeder ein Signal, vorzugsweise über die elektrische Zuleitung (26) oder drahtlos über eine Sende- und Empfangsanordnung, an die elektronische Regeleinrichtung (23) abgibt.

5. Aufbereitungseinrichtung nach Anspruch 1, dadurch gekennzeichnet, daß der stellungsaufnehmende Sensor (25) als Drehwinkelgeber ausgebildet ist, der vorzugsweise an der Schwenkachse (9) des, als Klappe oder Rechen oder dergl. oder als an Lenkern verschwenkbare Zustellwalze ausgebildeten, Zustellteiles (6, 7) angebracht ist oder als linearaufnehmender Sensor an der Verstellvorrichtung (13), insbesonders an dem, vorzugsweise als hydraulischer Stellzylinder, ausgebildeten Verstellorgan (12) angebracht ist oder von dem als elektrischem Linearmotor ausgebildeten Verstellorgan (12) selbst gebildet wird.

6. Aufbereitungseinrichtung nach einem der vorhergehenden Ansprüche, dadurch gekennzeichnet, daß die elektronische Regeleinrichtung Stellsignale, vorzugsweise über die elektrische Zuleitung (27) oder drahtlos über eine Sende- und Empfangsanordnung, an die Verstellvorrichtung (13) für die Betätigung des Verstellorgans (12) zur Vergrößerung des Abstandes (20) zwischen dem rotierenden Bearbeitungsteil (4) und dem Zustellteil (6 oder 7) abgibt, wenn der drehmomentaufnehmende oder druck- oder kraftaufnehmende Sensor (24) Signale über die Vergrößerung des einwirkenden Drehmomentes oder des Druckes oder der Kraft an die elektronische Regeleinrichtung (23), insbesonders über die elektrische Zuleitung (26) oder drahtlos über eine Sende- und Empfangsanordnung abgibt, die die Überschreitung eines, in diese einprogrammierten, Sollwertes für einen bestimmten Abstand (20) anzeigen und umgekehrt, wobei der stellungsaufnehmende Sensor (25) die Signale über die veränderte Stellung des Zustellteiles (6 oder 7) an die elektronische Regeleinrichtung (23), insbesonders über die elektrische Zuleitung (26) oder drahtlos über eine Sende- und Empfangsanordnung, übermittelt, die von dieser mit dem Drehmoment- Druck- oder Kraftsollwert für die veränderte Stellung des Zustellteiles (6,7) verglichen werden und die bei Abweichungen vom Sollwert über ein einprogrammiertes Maß hinaus weitere Stellsignale abgibt.

7. Aufbereitungseinrichtung nach einem der vorhergehenden Ansprüche, dadurch gekennzeichnet, daß die elektronische Regeleinrichtung (23) Stellsignale, insbesonders über die elektrische Zuleitung (27) oder drahtlos über eine Sende- und Empfangsanordnung, an die Verstellvorrichtung (13) zur Betätigung des Verstellorgans (12) für die Vergrößerung des Abstandes (20) zwischen dem rotierenden Bearbeitungsteil (4) und dem Zustellteil (6 oder 7) abgibt, wenn der drehzahlaufnehmende elektrische Sensor (25) Signale über die Verringerung der Drehzahl des Bearbeitungsteiles (4), insbesonders die elektrische Zuleitung (26) oder drahtlos über eine Sende- und Empfangsanordnung, an die elektronische Regeleinrichtung (23) abgibt und bei Abfall der Drehzahl unter einen, in den Rechner der elektronischen Regeleinrichtung (23) einprogrammierten, Grenzwert für den Abstand (20) zwischen dem Bearbeitungsteil (4) und dem Zustellteil (6 oder 7) diesen vergrößert und bei weiterem Verbleiben oder bei Absinken der Drehzahl unter den Grenzwert auf das größte, einprogrammierte Maß einstellt und bei Überschreiten dieses Grenzwertes der Drehzahl nach oben, wieder die vorherigen Abstände (20) für bestimmte Sollwerte der Drehzahl und des Drehmoments oder des Druckes oder der Kraft einstellt, wobei der stellungsaufnehmende Sensor (25) Signale über die Stellung des Zustellteiles (6 oder 7), insbesonders über die elektrische Zuleitung (26) oder drahtlos über eine Sende- und Empfangsanordnung, an die elektronische Regeleinrichtung (23) für den Vergleich mit den entsprechenden Sollwerten übermittelt .

8. Aufbereitungseinrichtung nach einem der vorhergehenden Ansprüche, dadurch gekennzeichnet, daß die elektronische Regeleinrichtung (23) bei Überschreiten eines programmierten Drehmoment- oder Druck- oder Kraftsollwertes für einen bestimmten Abstand (20) zwischen dem Bearbeitungsteil (4) und dem Zustellteil (6 oder 7) oder bei Unterschreiten einer programmierten Arbeitsdrehzahl, über eine einprogrammierte Zeitdauer hinaus, insbesonders über die elektrischen Zuleitungen (29) oder drahtlos über eine Sende- und Empfangsanordnung, ein Signal zur Betätigung einer Warnleuchte (30) und/oder einer Warnhupe (31) abgibt und/oder nach einem weiteren, vorprogrammierten Zeitraum in gleicher Weise ein Signal zum Unterbrechen des Antriebes für die Mähmaschine und für die Bearbeitungseinrichtung (1) durch Schaltung einer Kupplung abgibt.

9. Aufbereitungseinrichtung nach einem der vorhergehenden Ansprüche, dadurch gekennzeichnet, daß die elektronische Regeleinrichtung (23) mit einer Buskupplung (33) oder mit einer Übermittlungseinrichtung, insbesonders einer drahtlosen Sende- und Empfangsanordnung, für den Anschluß an das Bussystem eines externen Rechners, vorzugsweise an den Rechner des Zugfahrzeuges, versehen ist oder dem externen Rechner zugeordnet ist, wobei die Programmierung des Rechners der Regeleinrichtung (23) über den externen Rechner, insbesonders mit einem an die Maschinencharakteristik und die Ernteguteigenschaften angepaßten Regelungsprogramm oder über einen Zugangsslot einer elektronischen Lese- und vorzugsweise auch Schreibeinrichtung mit einer programmierbaren Speicher- oder Rechnerkarte erfolgt und daß gegebenenfalls im Rechner der Regeleinrichtung (23) gespeicherte Arbeitsdaten vom externen Rechner aus abrufbar, speicherbar und/oder, vorzugsweise auf einem Display, anzeigbar sind.

10. Aufbereitungseinrichtung für eine landwirtschaftliche Bearbeitungsmaschine, insbesonders für eine Mähmaschine mit einem Rotationsmähwerk, dieser nachgeordnet, welche Bearbeitungseinrichtung von einem Eingangsgetriebe, insbesonders mit gesonderter Antriebswelle antreibbar ist und im wesentlichen einen quer zur Fahrtrichtung liegend angeordneten, rotierend angetriebenen Bearbeitungsteil, insbesonders ortsfest gelagert und mit Bearbeitungswerkzeugen ausgebildet, einen zu diesem in einem veränderbaren Abstand fest einstellbaren Zustellteil, insbesonders als Klappe, Rechen oder drehbar gelagerte Zustellwalze ausgebildet, und eine im wesentlichen obere und seitliche Abdeckhaube umfaßt, **dadurch gekennzeichnet, daß** der Zustellteil (6,7) im Abstand (20) zum rotierenden Bearbeitungsteil (4) mit einer Verstellvorrichtung (13) veränderbar einstellbar ist und ein druckaufnehmender Sensor (24) mit einer Übertragungsvorrichtung gekoppelt ist, die insbesonders hydraulisch oder elektrisch über Leitungen oder drahtlos über eine Sende- und Empfangsanordnung eine Steuerungsvorrichtung, insbesonders ein hydraulisches oder ein elektrohydraulisches Steuerventil oder ein elektrisches Steuerrelais oder dergl. für ein Verstellorgan (12), vorzugsweise einen hydraulischen Stellzylinder oder einen elektrischen Verstellmotor zur Veränderung des Abstandes (20) zwischen dem Zustellteil (6,7) und dem Bearbeitungsteil (4), zwischen wenigstens zwei Abstandsgrößen, betätigt, die von einem stellungsaufnehmenden Sensor (25) über die Stellung des Verstellorganes (12) ermittelt und an die elektronische Regeleinrichtung (23) übermittelt werden.

11. Aufbereitungseinrichtung nach einem der vorhergehenden Ansprüche, dadurch gekennzeichnet, daß der Zustellteil (6) von der Abdeckhaube (8) gebildet ist, die beweglich, insbesonders um eine Schwenkachse verschwenkbar, am Maschinenrahmen (36) der Aufbereitungseinrichtung (1) gelagert ist.

12. Aufbereitungseinrichtung nach einem der vorhergehenden Ansprüche, dadurch gekennzeichnet, daß der druckaufnehmende Sensor (24) in der Zuleitung des als Verstellorgan (12) dienenden hydraulischen Stellzylinders, auf der Druckseite für das Vergrößern des Abstandes (20) zwischen dem Zustellteil (6,7) und dem Bearbeitungsteil (4) eingesetzt ist.
